# EUROPÄISCHE PATENTSCHRIFT

(11) **EP 2 419 231 B1**
(45) Veröffentlichungstag und Bekanntmachung des Hinweises auf die Patenterteilung: **05.05.2021**
(21) Anmeldenummer: 10717536.6
(22) Anmeldetag: 16.04.2010
(51) Int. Cl.: B22F 3/00, B22F 1/00, C23C 4/00, B29C 45/00, B29B 7/00, C23C 24/00

(54) **VERFAHREN ZUM PULVERBESSCHICHTEN BZW. ZUR HERSTELLUNG VON VERBUNDWERKSTOFFEN, VORZUGSWEISE BEI DER VERARBEITUNG VON KUNSTSTOFFEN ODER BEIM SPRÜHKOMPAKTIEREN VON METALLEN**
METHOD FOR POWDER COATING OR FOR PRODUCING COMPOSITE MATERIALS, PREFERABLY WHEN PROCESSING PLASTICS OR SPRAY COMPACTING METALS
PROCÉDÉ DE REVÊTEMENT PAR POUDRE OU DE FABRICATION DE MATÉRIAUX COMPOSITES, DE PRÉFÉRENCE LORS DE LA FABRICATION DE PLASTIQUES OU DU FORMAGE PAR PULVÉRISATION DE MÉTAUX

(30) Priorität: 17.04.2009 CH 630092009
(43) Veröffentlichungstag der Anmeldung: 22.02.2012
(73) Patentinhaber: Dvorak, Michael, 3602 Thun (CH); Mielemeier, Franz, 33154 Salzkotten (DE)
(72) Erfinder: Dvorak, Michael, 3602 Thun (CH); Mielemeier, Franz, 33154 Salzkotten (DE)
(74) Vertreter: Luchs, Willi
(86) Internationale Anmeldenummer: PCT/EP2010/002349
(87) Internationale Veröffentlichungsnummer: WO 2010/118881

(56) Entgegenhaltungen:
- EP-A1- 1 918 249
- WO-A1-03/029762
- WO-A1-2004/080578
- WO-A1-2005/031026
- WO-A1-2009/010297
- WO-A2-01/24935
- WO-A2-2007/100573
- DE-A1-102006 025 848
- DE-A1-102007 044 031
- US-A1- 2005 029 498

## Beschreibung

Die Erfindung bezieht sich auf ein Verfahren zum Pulverbeschichten bzw. zur Herstellung von Verbundwerkstoffen, vorzugsweise von Kunststoffen, insbesondere Elastomeren und Duroplasten, durch Verarbeiten, vorzugsweise durch Extrudieren oder Spritzgiessen, oder durch Sprühkompaktieren von Metallen, bei welchem während der Erzeugung dosierte Mengen von Zusatzstoffen, vorzugsweise Nanopulver und/oder Nanofasern, zur Bildung einer homogenen Matrix des zu erzeugenden Verbundwerkstoffes beigemischt werden.

Bei einer Injektion von Füllstoffen in aus zwei flüssigen Komponenten hergestellten Kunststoffen, wie beispielsweise Polyurethan, besteht die Gefahr, dass eine unerwünschte Entmischung und damit die Bildung einer Sedimentation der Füllstoffe während der Weiterverarbeitung erfolgt.

Zudem können diese Füllstoffe, die zum Beispiel sehr abrasiv sind, wie Glasfasern oder ähnliches, einen starken Verschleiss an den Bauteilen während des Transportes von hoch füllstoffhaltigen Flüssigkeiten verursachen.

Die konventionelle Pulverfördertechnik ist für diese Art von Mischen nur begrenzt geeignet, da sich eine Injektion gegen Druck schwierig zeigt und bedingt, dass Schüttgüter eine Fliessfähigkeit aufweisen. Zudem bilden feinkörnige oder faserige Füllstoffe sogenannte Agglomerate, welche vor der Injektion zwingend deagglomeriert (dispergiert) werden müssen.

In der Druckschrift WO-A-2007/100573 ist ein Herstellungsverfahren zur Erzeugung eines Polymergemisches mit Nanotube geoffenbart, bei welchem eine Aggregation der Mischung mit Nanotubes in einem polymeren Verbundmaterial behoben werden kann, indem eine Deagglomeration der Nanotubes vor dem Mischen der Verbundwerkstoffe und dem Extrudieren durch Ultraschall, Beschichten, chemische Behandlung oder andere bekannte Methoden erfolgen soll.

In der Druckschrift WO-A-2009/010297 ist eine Sprühkompaktiervorrichtung geoffenbart, bei welcher eine zweite Werkstoffkornponente von Pulverpartikeln in den erzeugten Sprühkegel aus flüssigen Metalltröpfchen zugeführt werden.

Bei einem bekannten Verfahren nach der Druckschrift EP-A-0 960 008 zur Herstellung füllstoffhaltiger Polyurethane, enthaltend eine Dosiereinrichtung für den Füllstoff, eine Dosiereinrichtung für das Polyol, eine eine Vollblattschnecke aufweisende Mischschnecke zur Vermischung von Füllstoff und Polyol. Ausserdem ist ein druckloser Zwischenspeicher für die füllstoffhaltige Polyolkomponente und eine Schraubenspindel- bzw. Exzenterschneckenpumpe zur Förderung der Mischung zu einem Mischkopf vorhanden. Der Mischkopf dient zur Vermischung der füllstoffhaltigen Polyol- mit der Isocyanatkomponente, wobei der Mischkopf eine Einleitöffnung für die füllstoffhaltige Polyolkomponente aufweist.

Bei der Beimischung von Nanopulvern und Nanofasern, insbesondere von Carbon-Nanotubes (CNT), zu den Kunststoffen, wie dies beispielsweise beim Spritzgiessen oder Extrudieren von Kunststoffen oder auch von Metallen erfolgt, empfiehlt sich ebenfalls eine Injektion der Füllstoffe nahe dem Kopf der Injektionsdüse oder Extruder, um das Entmischen, die Agglomeratbildung und den Verschleiss auf ein Minimum zu reduzieren.

Bei der Anwendung durch Sprühkompaktieren von Metallen (OSPREY), bei dem bekanntlich eine Metallschmelze über eine Düse mit Hilfe von einem Zerstäubergas verdüst und die auftreffenden Metalltropfen auf einer definierten Oberfläche erstarren, werden die Nanopartikel vorteilhaft in diesen Sprühstrahl bzw. in das Zerstäubergas eingeblasen.

Der vorliegenden Erfindung wurde demgegenüber die Aufgabe zugrundegelegt, ein Verfahren nach der eingangs erwähnten Gattung derart zu verbessern, dass Zusatzstoffe in zuverlässiger Weise für die Pulverbeschichtung in diese fliessenden Förderfluide in homogener Verteilung zugeführt werden können.

Die Aufgabe ist erfindungsgemäss dadurch gelöst, dass die Zusatzstoffe vor dem Beimischen zumindest teilweise in einem agglomerierten Zustand vorliegen, und anschliessend deagglomeriert und in den in Verarbeitung befindlichen Kunststoff bzw. Metall zur Bildung des homogenen Verbundwerkstoffes zugeführt werden.

Mit diesem erfindungsgemässen Verfahren können Zusatzstoffe mit einer hohen Verlässlichkeit und in einer annähernd beliebiger Konzentration in ein Förderfluid, wie in einen Kunststoff beim Extrudieren oder dergleichen bzw. in ein flüssiges Metall beim Dispergieren homogen verteilt zu einer Matrix gebildet werden.

Ein Ausführungsbeispiel der Erfindung sowie weitere Vorteile derselben sind nachfolgend anhand der Zeichnung näher erläutert. Es zeigt:

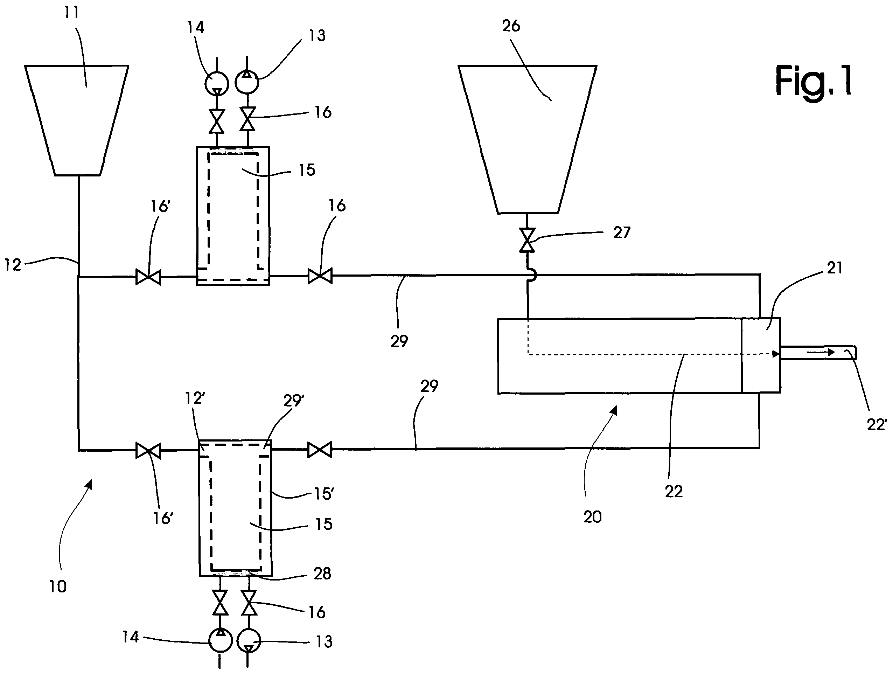

- Fig. 1: ein Schema einer vereinfacht dargestellten Anlage mit einer Fördervorrichtung von Carbon-Nanotubes (CNT) und einem Extruder.

Fig.1 zeigt eine Anlage mit einer Fördervorrichtung 10 für die Zuführung dosierter Mengen von Carbon-Nanotubes (CNT) als Nanofasern und einen Extruder 20 zum Extrudieren von Kunststoffen 22 als Förderfluid. Bei den Kunststoffen 22 kann es sich beispielsweise um Polyurethan, Polymere etc. handeln.

Erfindungsgemäss werden die Zusatzstoffe vor dem Beimischen in einem agglomerierten Zustand gehalten, und anschliessend deagglomeriert und in den in Verarbeitung befindlichen Kunststoff bzw. Metall zur Bildung des homogenen Verbundwerkstoffes zugeführt.

Vorteilhaft werden als Nanopulver und/oder Nanofasern insbesondere Carbon-Nanotubes (CNT) verwendet, welche im agglomerierten Zustand vor dem Beimischen pelletartig und annähernd staubfrei präpariert werden.

Die Fördervorrichtung 10 umfasst zwei Dosierkammern 15, welche parallel zueinander geschaltet und über mindestens eine Ansaugleitung 12 mit einem die Carbon-Nanotubes aufnehmenden Behälter 11 verbunden sind. In dieser schematisch dargestellten Anlage sind zwei solcher Dosierkammern 15 angedeutet, selbstverständlich könnten nur eine oder auch mehr vorhanden sein. An diese Dosierkammern 15 sind zudem jeweils einerseits eine Saugpumpe 13 und andererseits eine Druckpumpe 14 angeschlossen. Mittels entsprechend gesteuerten Ventilen 16, 16' bei den Ansaugleitungen 12 und Förderleitungen 29 bei den Dosierkammern 15, die nicht im Einzelnen erläutert sind, wird das Pulver durch die Saugpumpe 13 aus dem Behälter 11 in die jeweilige Dosierkammer 15 angesaugt, wobei dies so gesteuert werden kann, dass eine dosierte Menge darin eingefüllt wird.

Durch die Druckpumpe 14 werden dann die Carbon-Nanotubes in diesen dosierten Mengen aus den Dosierkammern pulsförmig zu dem Extruder 20 befördert und vorteilhaft beim Ausgangskopf 21 in den im Extruder 20 geförderten plastischen bzw. flüssigen Kunststoff 22 zugemischt. Der als Granulat oder dergleichen in einem Behälter 26 vorrätigen Kunststoff 22 wird auf herkömmliche Weise in den Extruder 20 gefördert und in diesem geschmolzen und extrudiert, wobei mittels eines Regulierventils 27 die Fördermenge bestimmt werden kann.

Eine solche Fördervorrichtung 10 ist in der Druckschrift WO-A-03/029762 in verschiedenen Varianten ausführlich beschrieben. Sie ist daher vorliegend nicht mehr in allen Einzelheiten dargetan.

Vor dem Ansaugen des wenigstens einen Zusatzstoffes wird ein pneumatischer Rückstoss in der Ansaugleitung 12 und oder im Behälter 11 erzeugt, um den Zusatzstoff in dieser Ansaugleitung 12 und / oder im Behälter 11, vorzugsweise auch beim Ansaugmundstück für den Zusatzstoff im Behälter 11 zu deagglomerieren und je nach Werkstoff eine sogenannte Vorfluidisierung zu erzielen, bei der dieser Zusatzstoff wie verflüssigt wird, beziehungsweise in diesem Bereich ein Gas-Zusatzstoffgemisch mit niedrigem Zusatzstoffgehalt erzeugt wird.

Somit können definiert sehr geringe Zusatzstoffmengen angesaugt und folgedessen auch sehr geringe Fördermengen in sehr genauer Dosierung gefördert werden, was bislang nicht möglich war. Dieser gepulste pneumatische Rückstoss in die Ansaugleitung 12 und in das Ansaugmundstück im Behälter wird durch die Druckpumpe 14 programmgesteuert erzeugt. Eine separate Druckpumpe ermöglicht auch die direkte Einleitung des Druckstosses in den im Behälter 11 gelagerten Zusatzstoff über eine separate, von der Ansaugleitung separaten Leitung. Anstelle der Druckpumpe könnte auch eine druckführende Leitung mit einem ansteuerbares Ventil vorgesehen sein.

Erfindungsgemäss werden diese CNT's pulsförmig unter Druck in den Kunststoff 22 mit einer so hohen Förderenergie zugeführt, dass durch die pulsförmige Druckbeaufschlagung eine Bildung von Agglomerationen oder einer ungleichmässigen bzw. inhomogenen Vermischung der CNT's im extrudierenden Kunststoff 22 verhindert wird.

Die Zusatzstoffe werden in der Fördervorrichtung umgelenkt, um die Deagglomeration durch die entstehenden Beschleunigungskräfte unter Bildung von hohen Kraftgradienten und Scherkräften auf die Agglomerate zu erzeugen. Dadurch werden Kraftgradienten und Scherkräfte auf allfällige Agglomerationen bzw. Konzentrationen bei den geförderten CNT's erzeugt und diese entsprechend auf mechanischem Wege aufgelöst, so dass eine homogene Verteilung in dem entstehenden Verbundwerkstoff gewährleistet ist. Die CNT's werden vorteilhaft mit einem pneumatischen Druck in den Kunststoff geleitet.

Zu diesem Zwecke ist die Dosierkammer 15 zusammen mit den Anschlussöffnungen 12', 29' für die Ansaugleitung 12 bzw. für die Förderleitung 29 T-förmig ausgebildet, so dass der Zusatzstoff beim Ansaugen durch die Ansaugleitung um 90° umgelenkt in die Dosierkammer und von dieser wieder zurück und wieder um 90° umgelenkt in die Förderleitung geleitet wird. Die Dosierkammer 15 und die Anschlussöffnungen 12', 29' sind von einem Gehäuse 15' gebildet und auf der den Anschlussöffnungen abgekehrten Seite ist ein an die Dosierkammer anschliessende Membrane 28 vorhanden, durch welche ein gasförmiges Medium von der Druckpumpe in die Dosierkammer bzw. von dieser zur Saugpumpe leitbar ist. Selbstverständlich könnte diese Ansaug- und Förderleitung zu der Dosierkammer anders als dargestellt angeordnet sein.

Die Erfindung ist mit dem oben erläuterten Ausführungsbeispiel ausreichend dargetan. Sie liesse sich jedoch noch in anderen Varianten darstellen. So eignet sie sich auch zum Zuleiten von Nanopulver und/oder Nanofasern in ein flüssiges Metall beim Sprühkompaktieren oder auch Sprühverdüsen von Metallschmelzen zur Herstellung von Kompositpulvern. Bei einem unmittelbaren Vorschalten vor einer Metall-Sprühkompaktieranlage könnten nanoskalige Zusatzstoffe - wie beispielsweise Nanopulver oder CNT's - direkt und gut dispergiert einem Weiterverarbeitungsrozess zugeführt werden, so dass Sicherheitsprobleme mit deagglomerierten nanoskaligen Zusatzstoffen vermieden würden.

Das erfindungsgemässe Verfahren kann aber auch sehr wirksam für Beschichtungen eingesetzt werden, wie zum Beispiel bei einer Plasmabeschichtung, welches eine Verarbeitung von nur gut deagglomerierten feinsten Pulvern erlaubt, bei einem thermischen Spritzverfahren, oder bei anderen Verfahren zur Herstellung von Schichtverbundwerkstoffen, bei denen mindestens ein Zusatzwerkstoff (Schichtwerkstoff) bei der Verarbeitung in Form von Pulver vorliegt, bspw. einer elektrostatischen Pulverbeschichtung oder Spritzlackierung mit Feststoffzusätzen oder ähnlichem.

Grundsätzlich wäre auch ein alternierender Betrieb mit mindestens zwei Pumpen insbesondere für eine kontinuierliche Zuführung des Pulvers bzw. Zusatzstoffes möglich, bei der dann zwei Leitungen und folglich eine Zusammenführung zu einer gemeinsamen Leitung vorgesehen wären.

Das erfindungsgemässe Verfahren kann aber auch zur Injektion von gut dispergiertem Pulver oder Fasern in einer Plasma- oder chemischen Reaktion zur Nachbehandlung, Funktionalisierung und/oder Beschichtung derselben verwendet werden.

## Patentansprüche

1. Verfahren zum Pulverbeschichten, oder zur Herstellung von Verbundwerkstoffen, vorzugsweise von Kunststoffen, durch Verarbeiten, vorzugsweise durch Extrudieren oder Spritzgiessen, bei welchem während der Erzeugung dosierte Mengen von Zusatzstoffen, vorzugsweise Nanopulver und/oder Nanofasern, zur Bildung einer homogenen Matrix des zu erzeugenden Verbundwerkstoffes beigemischt werden, wobei das Pulver vor dem Beschichten oder die Zusatzstoffe vor dem Beimischen zumindest teilweise in einem agglomerierten Zustand in wenigstens einem Behälter (11) mit einer Ansaugleitung (12) vorliegen, und anschliessend deagglomeriert und durch eine Druckpumpe (14) der Beschichtung bzw. in den in Verarbeitung befindlichen Verbundwerkstoff zugeführt werden, **dadurch gekennzeichnet, dass**
vor dem Ansaugen des Pulvers bzw. des wenigstens einen Zusatzstoffes durch die Druckpumpe (14) ein pneumatischer Rückstoss in die Ansaugleitung (12) und/oder im Behälter (11) erzeugt wird, um das Pulver bzw. den wenigstens einen Zusatzstoff zu deagglomerieren und/oder zu vorfluidisieren.

2. Verfahren zum Pulverbeschichten durch Sprühkompaktieren von Metallen, bei welchem während der Erzeugung dosierte Mengen von Zusatzstoffen, vorzugsweise Nanopulver und/oder Nanofasern, beigemischt werden, wobei das Pulver vor dem Beschichten zumindest teilweise in einem agglomerierten Zustand in wenigstens einem Behälter (11) mit einer Ansaugleitung (12) vorliegt, und anschliessend deagglomeriert und durch eine Druckpumpe (14) der Beschichtung zugeführt werden, **dadurch gekennzeichnet, dass**
vor dem Ansaugen des Pulvers durch die Druckpumpe (14) ein pneumatischer Rückstoss in den Auslassbereich des wenigstens einen Behälters (11) erzeugt wird, um den Zusatzstoff zu deagglomerieren und/oder zu vorfluidisieren.

3. Verfahren nach Anspruch 1 oder 2, **dadurch gekennzeichnet, dass** als Zusatzstoffe Nanopulver und/oder Nanofasern insbesondere Carbon-Nanotubes (CNT) verwendet werden, welche im agglomerierten Zustand vor dem Beimischen pelletartig, annähernd staubfrei präpariert werden.

4. Verfahren nach Anspruch 1 oder 2, **dadurch gekennzeichnet, dass** das Pulver bzw. die Zusatzstoffe pneumatisch aus dem wenigstens einem Behälter (11) in zumindest teilweise agglomeriertem Zustand in eine oder mehrere Dosierkammern (15) einer Fördervorrichtung (10) angesaugt und pulsförmig unter Druck derart in einen Prozess zu Herstellung von Verbundstoffen und Schichten zugeführt werden, dass durch die pulsförmige Druckbeaufschlagung die gewünschte Deagglomeration des Pulvers bzw. des Zusatzstoffes erfolgt.

5. Verfahren nach Anspruch 4, **dadurch gekennzeichnet, dass** die Zusatzstoffe in der Fördervorrichtung umgelenkt werden, um Beschleunigungskräfte unter Bildung von hohen Kraftgradienten und Scherkräften auf die Agglomerate zu erzeugen.

6. Verfahren nach Anspruch 5, **dadurch gekennzeichnet, dass** eine Ansaugleitung (12) zu und eine Förderleitung (29) von einer jeweiligen Dosierkammer (15) jeweils quer zur Längsausbildung dieser Dosierkammer angeordnet sind, so dass die agglomerierten Zusatzstoffe beim Ansaugen in die bzw. beim Wegführen aus der Dosierkammer umgelenkt werden.

7. Verfahren nach einem der Ansprüche 1 bis 6, **dadurch gekennzeichnet, dass** die Fördermenge, der Förderdruck, das Ansaugvakuum, die Pulszeit und/oder die Pulsfrequenz des zu fördernden Pulvers bzw. Zusatzstoffes, insbesondere Nanopulver und/oder der Nanofasern, gesteuert werden.

8. Verfahren nach einem der Ansprüche 1 bis 7, **dadurch gekennzeichnet, dass** das Nanopulver und/oder die Nanofasern unmittelbar vor dem Austritt des Kunststoffes aus dem Extruder bzw. des Metalls aus einer Sprühkompaktier- bzw. Verdüsungsanlage in das Förderfluid eingespritzt werden.

9. Verfahren nach Anspruch 1, **dadurch gekennzeichnet, dass** der deagglomerierte Zusatzstoff bei einer Plasmabeschichtung, bei einem thermischen Spritzverfahren, bei Schicht-Verbundwerkstoffen bspw, einer elektrostatischen Pulverbeschichtung oder bei thermischem Spritzverfahren oder ähnlichem eingesetzt wird.

10. Verfahren nach einem der Ansprüche 1 bis 9, **dadurch gekennzeichnet, dass** das Pulver bzw. wenigstens der Zusatzstoff mittels einer pneumatisch betriebenen Saugpumpe (13) oder ähnlich und einer Venturidüse oder dergleichen angesaugt und durch eine Förderleitung zum Prozess weiterbefördert wird, oder dass das Förderfluid durch diese Venturidüse angesaugt und mit dem Gasgemisch weiterbefördert wird.

11. Fördervorrichtung zur Durchführung des Verfahrens nach einem der Ansprüche 1 bis 10, mit mindestens einer Dosierkammer (15) und wenigstens einer mit dieser verbundenen, zu einem Behälter (11) führenden Ansaugleitung (12) und wenigstens einer Förderleitung (29), wobei ein Pulver bzw. wenigstens ein Zusatzstoff mittels einer Saugpumpe (13) in die Dosierkammer (15) ansaugbar und durch eine Druckpumpe (14) aus dieser weiter beförderbar ist, **dadurch gekennzeichnet, dass** vor dem Ansaugen des Pulvers bzw. des wenigstens einen Zusatzstoffes ein pneumatischer Rückstoss in die Ansaugleitung (12) und in den Auslassbereich des Behälters (11) durch die Druckpumpe (14) programmgesteuert erzeugbar ist.

12. Fördervorrichtung nach Anspruch 11, **dadurch gekennzeichnet, dass** ein zwischen der Ansaugleitung (12) und der Dosierkammer (15) angeordnetes Ventil (16') bei dem gepulsten pneumatischen Rückstoss geöffnet ist.

13. Fördervorrichtung nach Anspruch 11, **dadurch gekennzeichnet, dass** die Dosierkammer (15) zusammen mit den Anschlussöffnungen (12', 29') für die Ansaugleitung (12) bzw. für die Förderleitung (29) verwinkelt zueinander, wie T-förmig, ausgebildet sind.

14. Fördervorrichtung nach Anspruch 11, **dadurch gekennzeichnet, dass** die Dosierkammer (15) und die Anschlussöffnungen (12', 29') von einem Gehäuse (15') gebildet sind und auf der den Anschlussöffnungen abgekehrten Seite ein an die Dosierkammer anschliessende Membrane (28) vorhanden ist, durch welche ein gasförmiges Medium von der Druckpumpe in die Dosierkammer (15) bzw von dieser zur Saugpumpe leitbar ist.

## Claims

1. A method for powder coating or producing composite materials, preferably plastics, by processing, preferably extruding or injection moulding in which, during production, metered quantities of additives, preferably nanopowders and/nanofibres, are admixed to form a homogeneous matrix of the composite material to be produced, wherein, prior to the powder being coated or the additives being admixed, same are present at least partially in an agglomerated state in at least one container (11) with an inlet pipe (12), and subsequently deagglomerated and added to the coating or the composite material being processed by a pressure pump (14), **characterised in that**,
before aspiration of the powder or of the at least one additive by the pressure pump (14), a pneumatic recoil is produced in the inlet pipe (12) and/or in the container (11) in order to deagglomerate and/or pre-fluidise the powder or the at least one additive.

2. A method for powder coating by spray compacting metals in which, during production, metered quantities of additives, preferably nanopowders and/or nanofibres, are admixed, wherein, prior to the powder being coated it is present at least partially in an agglomerated state in at least one container (11) with an inlet pipe (12), and subsequently deagglomerated and added to the coating by a pressure pump (14), **characterised in that**, before aspiration of the powder by the pressure pump (14), a pneumatic recoil is produced in the outlet region of the at least one container (11) in order to deagglomerate and/or pre-fluidise the additive.

3. The method according to claim 1 or 2, **characterised in that**
there are used as additives nanopowders and/or nanofibres, in particular carbon nanotubes (CNT) which are prepared in pellet form, approximately dust-free, in agglomerated state before admixing.

4. The method according to claim 1 or 2, **characterised in that**
the powder or the additives are aspirated and added, in pulsed manner and under pressure, in a process for producing composites and coatings, pneumatically out of the at least one container (11) and into one or more metering chambers (15) of a conveyor (10) in at least partially agglomerated state such that the powder or additive deagglomerates as desired due to the pulsed application of pressure.

5. The method according to claim 4, **characterised in that**
the additives are turned around in the conveyor in order to produce accelerating forces on the agglomerates accompanied by the formation of high spring characteristics and shear forces.

6. The method according to claim 5, **characterised in that**
an inlet pipe (12) to and a feed pipe (29) from each metering chamber (15) are arranged respectively transverse to the linear line of this metering chamber, with the result that the agglomerated additives are turned around when being aspirated into or conducted away from the metering chamber.

7. The method according to one of claims 1 to 6, **characterised in that**
the conveying quantity, conveying pressure, aspiration vacuum, pulse time and/or pulse frequency of the powder or additive being conveyed, in particular nanopowders and/or nanofibres, is/are controlled.

8. The method according to one of claims 1 to 7, **characterised in that**
the nanopowder and/or the nanofibres are injected directly before the plastic from the extruder or the metal from a spray compacter or atomising system is output into the conveying fluid.

9. The method according to claim 1, **characterised in that**
the deagglomerated additive is used in a plasma coating, thermal injection spraying method, laminates, e.g. an electrostatic powder coating or thermal injection spraying method or similar.

10. The method according to one of claims 1 to 9, **characterised in that**
the powder or at least the additive is aspirated by means of a pneumatically operated suction pump (13) or similar and a venturi nozzle or the like and is forwarded to the process by a feed pipe, or that the conveying fluid is aspirated by this venturi nozzle and forwarded with the gas mixture.

11. A conveyor for carrying out the method according to one of claims 1 to 10, with at least one metering chamber (15) and at least one inlet pipe (12) connected thereto and leading to a container (11) and at least one feed pipe (29), wherein a powder or at least one additive can be aspirated into the metering chamber (15) by means of a suction pump (13) and forwarded out of same by a pressure pump, **characterised in that**,
prior to the powder or the at least one additive being aspirated, a pneumatic recoil can be produced in programme-controlled manner in the inlet pipe (12) and in the outlet region of the container (11) by the pressure pump (14).

12. The conveyor according to claim 11, **characterised in that**
a valve (16') arranged between the inlet pipe (12) and the metering chamber (15) is opened with the pulsed pneumatic recoil.

13. The conveyor according to claim 11, **characterised in that**
the metering chamber (15) together with the connecting openings (12', 29') for the inlet pipe (12) or for the feed pipe (29) are designed at an angle, such as T-shaped, to one another.

14. The conveyor according to claim 11, **characterised in that**
the metering chamber (15) and the connecting openings (12', 29') are formed by a housing (15'), and a membrane (28) connecting to the metering chamber is present on the side turned away from the connecting openings, through which membrane a gaseous medium can be conducted from the pressure pump into the metering chamber (15) or from same to the suction pump.

## Revendications

1. Procédé de revêtement par de la poudre ou de production de matériaux composites, de préférence de matières plastiques, par transformation, de préférence par extrusion ou par moulage par injection, dans lequel, pendant la production, on mélange des quantités dosées d'additifs, de préférence de nanopoudre et/ou de nanofibres, pour la formation d'une matrice homogène du matériau composite à produire, dans lequel la poudre se présente avant le revêtement ou les additifs avant le mélange au moins en partie dans un état aggloméré dans au moins un récipient (11) ayant un conduit (12) d'aspiration et ensuite on les désagglomère et on les envoie par une pompe (14) de refoulement au revêtement ou au matériau composite se trouvant en transformation, **caractérisé en ce qu'**avant l'aspiration de la poudre ou du au moins un additif par la pompe (14) de refoulement, on produit un choc en arrière pneumatique dans le conduit (12) d'aspiration et/ou dans le récipient (11), afin de désagglomérer et/ou de fluidiser à l'avance la poudre ou le au moins un additif.

2. Procédé de revêtement par de la poudre par compactage par pulvérisation de métaux, dans lequel, pendant la production, on mélange des quantités dosées d'additifs, de préférence de nanopoudre et/ou de nanofibres, la poudre se présentant avant le revêtement au moins en partie dans un état aggloméré, dans au moins un récipient (11) ayant un conduit (12) d'aspiration et ensuite, on la désagglomère et on l'envoie au revêtement par une pompe (14) de refoulement,
**caractérisé en ce qu'**avant l'aspiration de la poudre par la pompe (14) de refoulement on produit un choc en retour pneumatique dans la région de sortie du au moins un récipient (11) afin de désagglomérer l'additif et/ou de le fluidiser à l'avance.

3. Procédé suivant la revendication 1 ou 2, **caractérisé en ce que** l'on utilise comme additifs de la nano poudre et/ou des nanofibres notamment des nanotubes de carbone (CNT) que l'on prépare en étant de type à pastille à peu près sans poussière, dans l'état aggloméré avant le mélange.

4. Procédé suivant la revendication 1 ou 2, **caractérisé en ce que** l'on aspire la poudre ou les additifs pneumatiquement du au moins un récipient (11) à l'état au moins en partie agglomérés, dans une chambre ou dans plusieurs chambres (15) de dosage d'une installation (10) de transport et on les envoie sous forme pulsée sous pression à un processus de production de matières composites et de couches, de manière à ce que, par la pression sous forme pulsée, se produise la désagglomération souhaitée de la poudre ou de l'additif.

5. Procédé suivant la revendication 4, **caractérisé en ce que** l'on dévie les additifs dans l'installation de transport, pour produire des forces d'accélération avec formation de grands gradients de force et de force de cisaillement sur les agglomérés.

6. Procédé suivant la revendication 5, **caractérisé en ce qu'**un conduit (12) d'aspiration, allant à une chambre (15) de dosage respective et un conduit (29) de transport en partant, sont disposés respectivement transversalement à la constitution longitudinale de cette chambre de dosage, de manière à dévier les additifs agglomérés lors de l'aspiration dans la chambre de dosage ou lors de leur éloignement de la chambre de dosage.

7. Procédé suivant l'une des revendications 1 à 6, **caractérisé en ce que** l'on règle la quantité refoulée, la pression de refoulement, le vide d'aspiration, la durée des impulsions et/ou la fréquence des impulsions de la poudre ou de l'additif transporté, notamment de la nanopoudre et/ou des nanofibres.

8. Procédé suivant l'une des revendications 1 à 7, **caractérisé en ce que** l'on injecte dans le fluide de refoulement la nanopoudre et/ou les nanofibres directement avant la sortie de la matière plastique de l'extrudeuse ou du métal de l'installation de compactage par pulvérisation ou de pulvérisation.

9. Procédé suivant la revendication 1, **caractérisé en ce que** l'on utilise l'additif desaggloméré dans un revêtement au plasma, dans un procédé de pulvérisation thermique, dans des matériaux composites stratifiés, par exemple un revêtement de poudre électrostatique, ou dans un procédé de pulvérisation thermique ou analogue.

10. Procédé suivant l'une des revendications 1 à 9, **caractérisé en ce que** l'on aspire la poudre ou au moins l'additif au moyen d'une pompe (13) de refoulement à fonctionnement pneumatique ou analogue et d'une buse venturi ou analogue et on l'achemine au processus par un conduit de refoulement, **en ce que** l'on aspire le fluide de refoulement par cette buse venturi et on l'achemine plus loin avec le mélange de gaz.

11. Installation de refoulement pour effectuer le procédé suivant l'une des revendications 1 à 10, comprenant au moins une chambre (15) de dosage et au moins un conduit (12) d'aspiration, communiquant avec celle-ci et menant à un récipient (11), et au moins un conduit (29) de refoulement, une poudre ou au moins un additif pouvant être aspiré au moyen d'une pompe (13) aspirante dans la chambre (15) de dosage, et pouvant être refoulé hors de celle-ci par une pompe (14) de refoulement, **caractérisée en ce qu'**avant l'aspiration de la pompe ou du au moins un additif, un choc en retour pneumatique peut être produit, d'une manière commandée par programme, par la pompe (14) de refoulement dans le conduit (12) d'aspiration et dans la région de sortie du récipient (11).

12. Installation de refoulement suivant la revendication 11, **caractérisée en ce qu'**une vanne (16'), montée entre le conduit (12) d'aspiration et la chambre (15) de dosage, est ouverte lors du choc en retour pneumatique pulsé.

13. Installation suivant la revendication 11, **caractérisée en ce que** la chambre (15) de dosage ensemble avec les ouvertures (12', 29') de raccordement du conduit (12) d'aspiration ou du conduit (29) de refoulement sont constituées de manière coudée les uns par rapport aux autres, comme en forme de T.

14. Installation suivant la revendication 11, **caractérisée en ce que** les chambres (15) de dosage et les ouvertures (12', 29') de raccordement sont formées par une enveloppe (15') et il y a, du côté loin des ouvertures de raccordement, une membrane (28) qui se raccorde aux chambres de dosage et par laquelle un milieu gazeux peut être envoyé par la pompe de refoulement dans les chambres (15) de dosage ou en être retiré vers la pompe d'aspiration.
